# EUROPÄISCHE PATENTSCHRIFT

(11) **EP 4 011 706 B1**
(45) Veröffentlichungstag und Bekanntmachung des Hinweises auf die Patenterteilung: **23.08.2023**
(21) Anmeldenummer: 21208477.6
(22) Anmeldetag: 16.11.2021
(51) Int. Cl.: B60R 9/06, B60R 9/10

(54) **HECKTRÄGERSYSTEM FÜR EIN KRAFTFAHRZEUG**
REAR RACK SYSTEM FOR A MOTOR VEHICLE
SYSTÈME DE SUPPORT ARRIÈRE POUR UN VÉHICULE AUTOMOBILE

(30) Priorität: 08.12.2020 DE 102020215454
(43) Veröffentlichungstag der Anmeldung: 15.06.2022
(73) Patentinhaber: ATERA GmbH, 88299 Leutkirch im Allgäu (DE)
(72) Erfinder: Schulz, Albert, 88316 Isny (DE)
(74) Vertreter: Patentanwälte Ruff, Wilhelm, Beier, Dauster & Partner mbB

(56) Entgegenhaltungen:
- DE-A1- 4 241 008
- DE-T2- 60 101 990
- US-A- 4 915 276

## Beschreibung

Die Erfindung betrifft ein Heckträgersystem für ein Kraftfahrzeug mit zwei fahrzeugfesten Trägeraufnahmen, und mit zwei Trägerprofilen, die an fahrzeugseitigen Endbereichen jeweils mit einer Befestigungsprofilierung versehen sind, mittels der jedes Trägerprofil in betriebsfertig montiertem Zustand lösbar an der zugeordneten Trägeraufnahme befestigt ist. Das Dokument US 4 915 276 A zeigt ein Heckträgersystem nach dem Oberbegriff des Anspruchs 1. Die Dokumente

DE 42 41 008 A1 und DE 601 01 990 T2 zeigen des weiteren Heckträgersysteme mit fahrzeugfesten Trägeraufnahmen, die drehbare Verschlussanordnungen für Trägerprofile aufweisen.

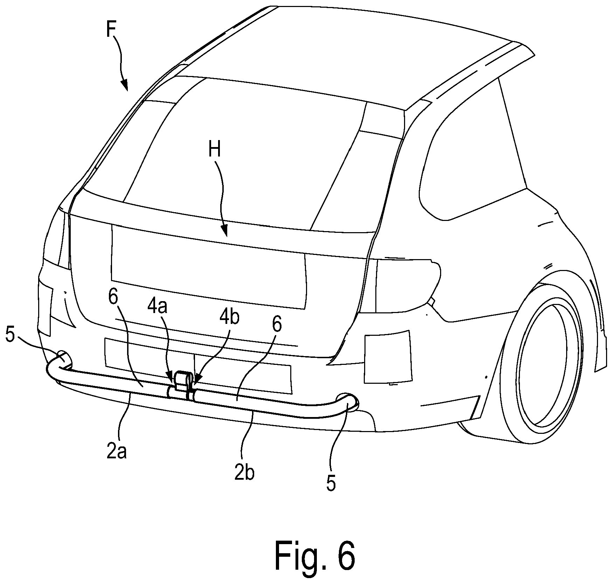

Ein derartiges Heckträgersystem ist aus der DE 10 2004 033 809 A1 bekannt. Ein Personenkraftwagen weist hierzu im Bereich eines heckseitigen Stoßfängers zwei Trägeraufnahmen auf, die fest mit einer Karosserietragstruktur verbunden sind. Die Trägeraufnahmen sind bei einer Ausführungsform gemäß Fig. 6 als Bajonettverschlussaufnahmen ausgeführt. Jeder der beiden Trägeraufnahmen ist ein im Wesentlichen zylindrisches Trägerprofil zugeordnet, das an seinem fahrzeugseitigen Endbereich mit einem komplementären Bajonettverschlussabschnitt versehen ist, um eine lösbare Fixierung jedes Trägerprofils an der Bajonettverschlussaufnahme jeder fahrzeugfesten Trägeraufnahme zu ermöglichen. In betriebsfertig montiertem Zustand ragen die beiden Trägerprofile in Fahrzeuglängsrichtung nach hinten ab. Mittels eines weiteren Bauteils, das die beiden Trägerprofile miteinander verbindet und in Form eines Querträgers oder einer Funktionsplattform ausgeführt ist, wird das Heckträgersystem komplettiert.

Aufgabe der Erfindung ist es, ein Heckträgersystem der eingangs genannten Art zu schaffen, das einen einfachen und dennoch funktionssicheren Aufbau ermöglicht.

Diese Aufgabe wird dadurch gelöst, dass jedes Trägerprofil in Abstand zu der Befestigungsprofilierung mit einer Stützprofilierung versehen ist, wobei die Stützprofilierungen in betriebsfertig montiertem Zustand der Trägerprofile formschlüssig gegeneinander abgestützt sind. Bei der erfindungsgemäßen Lösung wird demzufolge kein zusätzliches Bauteil benötigt, um die Trägerprofile miteinander zu verbinden. Vielmehr stützen die beiden Trägerprofile sich in betriebsfertig montiertem Zustand über die Stützprofilierungen gegeneinander ab und bilden demzufolge gemeinsam eine stabile Basis, um weitere Funktionskomponenten des Heckträgersystems abstützen zu können. Entsprechende Funktionskomponenten sind zur Halterung oder Aufnahme von Transportgut vorgesehen, das heckseitig gemeinsam mit einem entsprechenden Kraftfahrzeug transportiert werden kann. Als bevorzugtes Transportgut für das erfindungsgemäße Heckträgersystem ist wenigstens ein Freizeitgerät, insbesondere wenigstens ein Zweirad, vorzugsweise ein Fahrrad oder ein E-Bike, vorgesehen. Die Funktionskomponenten, die von den beiden Trägerprofilen getragen werden, sind zur Halterung oder Aufnahme von entsprechendem Transportgut ausgebildet, vorzugsweise zur Halterung und Abstützung von wenigstens zwei Fahrrädern. Die beiden Trägeraufnahmen sind fest mit einer heckseitigen Karosserietragstruktur des Kraftfahrzeugs verbunden. Vorzugsweise sind die Trägeraufnahmen an heckseitigen Endbereichen von Längs- oder Querträgern der Karosserietragstruktur des Kraftfahrzeugs angeordnet. Die erfindungsgemäße Lösung eignet sich in besonders vorteilhafter Weise für den Einsatz bei Personenkraftwagen.

In Ausgestaltung der Erfindung ist jedes Trägerprofil winklig gekrümmt, wobei die Befestigungsprofilierung an einem ersten Profilschenkel und die Stützprofilierung an einem abgewinkelten zweiten Profilschenkel angeordnet sind. Unter der winkligen Krümmung ist sowohl eine Abkröpfung als auch eine Biegung oder eine Abwinklung zu verstehen. Vorzugsweise ist eine rechtwinklige Krümmung vorgesehen. Der erste und der zweite Profilschenkel können Teil eines einstückigen, durchgängigen Längsprofils, insbesondere eines metallischen Profils, vorzugsweise eines metallischen Hohlprofils, sein. Alternativ ist es möglich, den ersten und den zweiten Profilschenkel separat herzustellen und durch insbesondere stoffschlüssige Verbindung, vorzugsweise Verschweißung, gegeneinander in der gewünschten winkligen Krümmung auszurichten. Der zweite Profilschenkel ist relativ zu dem ersten Profilschenkel mit unterschiedlicher Längserstreckung ausgerichtet, so dass Mittellängsachsen der beiden Profilschenkel winklig zueinander ausgerichtet sind. Die winklige Ausrichtung ist aufgrund der formstabilen Gestaltung des Trägerprofils unveränderbar.

In weiterer Ausgestaltung der Erfindung sind die Befestigungsprofilierung und die Stützprofilierung an gegenüberliegenden Stirnendbereichen des Trägerprofils vorgesehen. Die Befestigungsprofilierung des jeweiligen Trägerprofils ist als mechanische Rast- oder Steckverbindung ausgeführt, die vorzugsweise werkzeuglos lösbar oder montierbar ist.

Die Steck- oder Rastverbindung ist eine Bajonettverschlussanordnung.

In weiterer Ausgestaltung der Erfindung ist jedes Trägerprofil einteilig oder mehrteilig gestaltet. Bei einer mehrteiligen Gestaltung sind die einzelnen Teile des Trägerprofils einander fest und formstabil zugeordnet, so dass in fertig montiertem Zustand die einzelnen Teile relativ zueinander nicht veränderbar sind. Von dieser Ausgestaltung umfasst ist eine knick- oder schwenkbewegliche Lagerung der Teile des Trägerprofils relativ zueinander mit entsprechender formstabiler und in der Ausrichtung unveränderbarer Fixierung der Teile relativ zueinander in der betriebsfertig montierten Endstellung.

In weiterer Ausgestaltung der Erfindung bilden die beiden Stützprofilierungen der Trägerprofile in betriebsfertig montiertem Zustand einen Trägerabschnitt zur Halterung wenigstens einer Funktionskomponente des Heckträgersystems. Der Trägerabschnitt kann als Querträger oder als prismen- oder kugelförmiger Trägerkopf ausgeführt sein. Bei einem prismen- oder kugelförmigen Trägerkopf ist es möglich, eine Halterungsvorrichtung eines bekannten Heckträgersystems ohne konstruktive Änderungen auf den Trägerprofilen zu montieren, da der kugel- oder prismenförmige Trägerkopf als Ersatz für einen Kugelkopf einer Anhängerkupplung des Kraftfahrzeugs dienen kann.

In weiterer Ausgestaltung der Erfindung sind in betriebsfertig montiertem Zustand die zweiten Profilschenkel, die die Stützprofilierungen tragen, einander zugewandt. Vorzugsweise überlagern in betriebsfertig montiertem Zustand die komplementären Stützprofilierungen einander derart, dass sie eine Trägerkontur für die Befestigung einer Haltevorrichtung von Funktionskomponenten des Heckträgersystems bilden. Die Stützprofilierungen sind derart gestaltet, dass sie sich in betriebsfertig montiertem Zustand zu einer gemeinsamen Trägerkontur ergänzen, wobei sie sich - in betriebsfertig montiertem Zustand gesehen - vorzugsweise in Fahrzeugquerrichtung überlagern und jeweils einen Teilabschnitt der Trägerkontur bilden. In betriebsfertig montiertem Zustand ergänzen sich diese Teilabschnitte dann zu der gewünschten Trägerkontur.

In weiterer Ausgestaltung der Erfindung hintergreifen die Stützprofilierungen einander in betriebsfertig montiertem Zustand in Hochrichtung zumindest abschnittsweise unter Bildung eines gegenseitigen, in Hochrichtung wirksamen Stützanschlags. In zusammengefügtem Funktionszustand stützen die Stützprofilierungen sich demzufolge - auf eine Fahrzeughochrichtung bezogen - nach unten formschlüssig ab, so dass sie hohe Nutzlasten tragen können.

In weiterer Ausgestaltung der Erfindung ragt die Trägerkontur in betriebsfertig montiertem Zustand der Profilschenkel nach Art eines Trägerkopfs nach oben ab, und die Trägerkontur ist jeweils abschnittsweise durch die Stützprofilierungen beider Profilschenkel gebildet. Die Stützprofilierungen überlagern einander in betriebsfertig montiertem Zustand und sind formschlüssig gegeneinander abgestützt. Dadurch, dass die Stützprofilierungen jeweils teilweise die Trägerkontur nach Art eines Trägerkopfs bilden, ist ein einfacher Toleranzausgleich möglich.

Die Befestigungsprofilierung jedes ersten Profilschenkels jedes Trägerprofils und die zugeordnete fahrzeugfeste Trägeraufnahme sind als komplementäre Bajonettverschlussanschnitte einer Bajonettverschlussanordnung gestaltet, die derart ausgelegt ist, dass der jeweilige zweite Profilschenkel in der betriebsfertig montierten Drehstellung des ersten Profilschenkels fluchtend zu dem zweiten Profilschenkel des jeweils anderen Trägerprofils ausgerichtet ist. Bei dieser Ausgestaltung sind die zweiten Profilschenkel vorzugsweise in Fahrzeugquerrichtung ausgerichtet, wenn sie sich in betriebsfertig verdrehter Endstellung befinden, und die ersten Profilschenkel sind in Fahrzeuglängsrichtung ausgerichtet.

In weiterer Ausgestaltung der Erfindung sind die Stützprofilierungen der gegenüberliegenden zweiten Profilschenkel derart relativ zueinander ausgerichtet, dass die Stützprofilierungen bei einer Verdrehung der zweiten Profilschenkel aus einer Einsteckposition in die betriebsfertig verdrehte Endstellung zwangsläufig ineinander eintauchen. Hierdurch wird eine besonders einfache Montage und Demontage der Trägerfunktionskomponenten des Heckträgersystems erzielt, da die beiden Trägerprofile lediglich mit ihren ersten Profilschenkeln in die Trägeraufnahmen eingesteckt und anschließend zu einer Fahrzeugmitte hin verdreht werden müssen, wodurch sich zwangsläufig die formschlüssige Überlagerung und Arretierung der Stützprofilierungen relativ zueinander ergibt.

In weiterer Ausgestaltung der Erfindung ist der Bajonettverschlussabschnitt jeder fahrzeugfesten Trägeraufnahme mit einem Endanschlag versehen, der der betriebsfertig verdrehten Endstellung der ersten Profilschenkel entspricht. Die jeweilige Bajonettverschlussanordnung wird durch einen ersten Bajonettverschlussabschnitt im Bereich der fahrzeugfesten Trägeraufnahme und durch einen zweiten Bajonettverschlussabschnitt im Bereich des ersten Profilschenkels jedes Trägerprofils gebildet. Die Bajonettverschlussabschnitte der fahrzeugfesten Trägeraufnahmen bilden demzufolge einen Endanschlag für die trägerprofilseitigen Bajonettverschlussabschnitte der ersten Profilschenkel.

In weiterer Ausgestaltung der Erfindung sind die Bajonettverschlussabschnitte der benachbarten Trägeraufnahmen gegensinnig zueinander ausgerichtet. Dadurch ergibt sich zwangsläufig eine Überführung der beiden Trägerprofile in die betriebsfertig montierte Endstellung, sobald die Trägerprofile nach einem Einstecken gegensinnig zueinander zur Fahrzeugmitte hin verdreht werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Heckbereich eines Personenkraftwagens mit einer Ausführungsform eines erfindungsgemäßen Heckträgersystems, bei dem entsprechende Trägerprofile in einer Explosionsdarstellung gezeigt sind,
- Fig. 2: in vergrößerter Darstellung einen Teilbereich eines in Fig. 1 linken Ausschnitts der Darstellung nach Fig. 1,
- Fig. 3: einen vergrößerten Ausschnitt III der Darstellungen nach den Fig. 1 und 2,
- Fig. 4: den Personenkraftwagen gemäß Fig. 1 mit den in einer Zwischenstellung befindlichen Trägerprofilen des Heckträgersystems gemäß Fig. 1,
- Fig. 5: das Heck des Personenkraftwagens gemäß den Fig. 1 und 4, wobei die Trägerprofile sich in einer weiteren Zwischenstellung befinden,
- Fig. 6: den Personenkraftwagen gemäß den Fig. 1, 4 und 5, wobei die Trägerprofile sich in einer betriebsfertig montierten Endstellung befinden,
- Fig. 7: die Darstellung gemäß Fig. 6, jedoch mit betriebsfertig montierten weiteren Funktionskomponenten des Heckträgersystems,
- Fig. 8: in stark vergrößerter Darstellung einen Ausschnitt der Zwischenstellung gemäß Fig. 5 und
- Fig. 9: in stark vergrößerter Darstellung einen Ausschnitt der betriebsfertig montierten Endstellung gemäß Fig. 6.

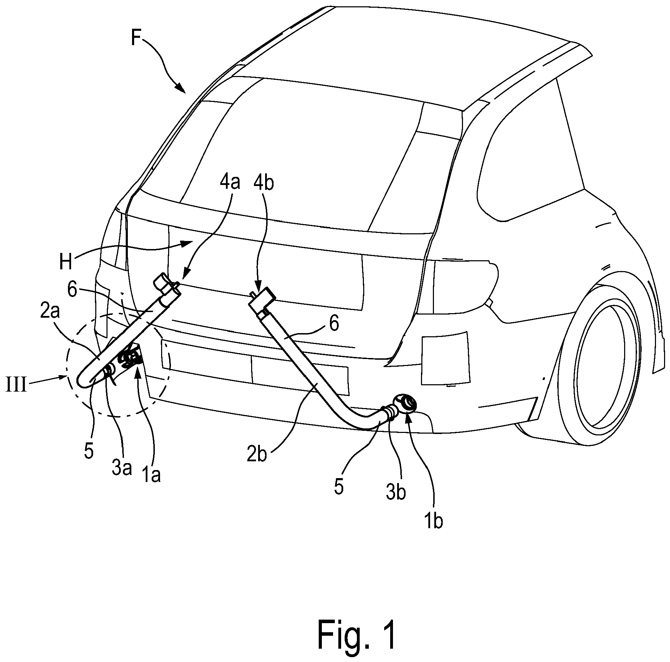

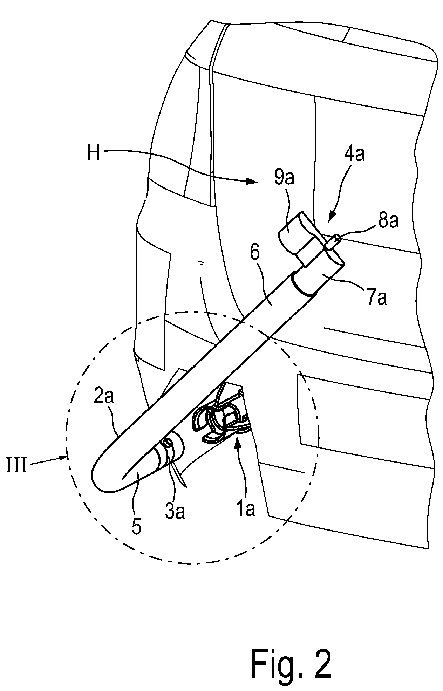

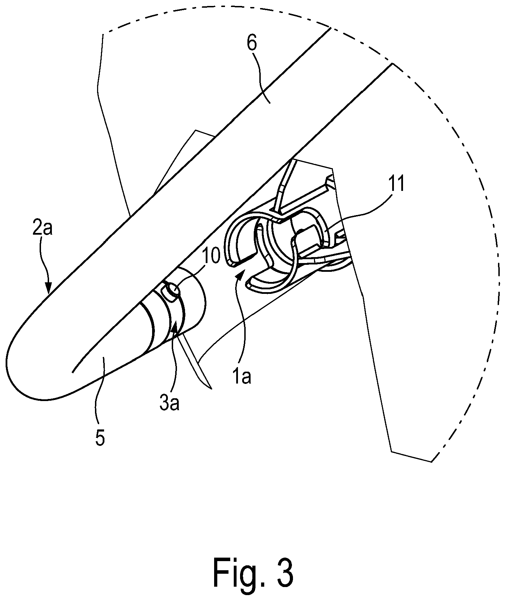

Ein Personenkraftwagen F weist einen Heckbereich H auf, dem ein anhand der Fig. 1 bis 9 nachfolgend näher beschriebenes Heckträgersystem zugeordnet ist. Der Personenkraftwagen F ist mit einer Karosserietragstruktur versehen, die in einem Heckbereich des Personenkraftwagens F entsprechende Karosserieträgerteile wie insbesondere Karosseriequerträger und Karosserielängsträger aufweist. Die heckseitigen Karosserieträgerteile der Karosserietragstruktur sind in dem Heckbereich H des Personenkraftwagens F durch Heckverkleidungsteile wie insbesondere einen Heckstoßfänger verdeckt. Die nicht näher bezeichneten Heckverkleidungsteile weisen auf Höhe des Heckstoßfängers an zwei gegenüberliegenden Seiten kreisförmige Durchtritte auf, die durch nicht näher dargestellte Blenden verdeckt werden können. Hinter diesen Durchtritten ist jeweils eine fahrzeugfeste Trägeraufnahme 1a vorgesehen, die fest und kraftübertragend mit einem Karosserieträgerteil der Karosserietragstruktur verbunden ist. Die Trägeraufnahme 1a bildet einen Aufnahmebereich, dessen Mittellängsachse in Fahrzeuglängsrichtung ausgerichtet ist. Die beiden gegenüberliegenden, fahrzeugfesten Trägeraufnahmen 1a sind bezüglich ihrer Mittellängsachsen der Aufnahmebereiche parallel zueinander und damit jeweils in Fahrzeuglängsrichtung ausgerichtet.

Jede Trägeraufnahme 1a bildet einen Bajonettverschlussabschnitt in Form einer Bajonettverschlussaufnahme 11, in die ein entsprechend komplementärer Bajonettverschlussabschnitt 10 eines Trägerprofils 2a, 2b einsteckbar und um die Mittellängsachse des Aufnahmebereichs der Bajonettverschlussaufnahme und damit der Trägeraufnahme 1a, 1b verdrehbar ist. Die beiden Bajonettverschlussaufnahmen 11 für die Trägeraufnahme 1a und die Trägeraufnahme 1b sind gegensinnig zueinander, im Übrigen jedoch identisch zueinander gestaltet.

Die beiden Trägeraufnahmen 1a und 1b dienen zur Aufnahme jeweils eines Trägerprofils 2a, 2b, die bezüglich ihres funktionalen Aufbaus identisch gestaltet sind. Jedes Trägerprofil 2a, 2b wird durch ein geschlossenes Hohlprofil, vorliegend ein zylindrisches Hohlprofil, gebildet, wobei jedes Trägerprofil 2a, 2b L-förmig rechtwinklig gekrümmt ist unter Bildung eines ersten Profilschenkels 5 und eines rechtwinklig anschließenden zweiten Profilschenkels 6. Dem ersten Profilschenkel 5 jedes Trägerprofils 2a, 2b ist an einem fahrzeugseitigen Ende eine Befestigungsprofilierung 3a, 3b zugeordnet, die bei den Trägerprofilen 2a, 2b jeweils als männlicher Bajonettverschlussabschnitt 10 ausgeführt ist. Der männliche Bajonettverschlussabschnitt ist an einem Stirnendbereich des ersten Profilschenkels 5 angeordnet und wird für eine Montage koaxial in den Aufnahmebereich der Bajonettverschlussaufnahme 11 der Trägeraufnahme 1a eingesteckt, wobei zwei Kulissenzapfen des männlichen Bajonettverschlussabschnitts 10 in entsprechende Kulissenführungen der weiblichen Bajonettverschlussaufnahme 11 eintauchen. Die Kulissenführungen der Bajonettverschlussaufnahme 11 sind in ihrem rückseitigen Endbereich rechtwinklig im Uhrzeigersinn abgewinkelt, so dass die Kulissenzapfen des männlichen Bajonettverschlussabschnitts des ersten Profilschenkels 5 in diesen Endbereichen der Kulissenführungen der weiblichen Bajonettverschlussaufnahme 11 durch Verdrehen des ersten Profilschenkels 5 im Uhrzeigersinn arretiert werden können. Der männliche Bajonettverschlussabschnitt des in den Figuren rechten Trägerprofils 2b ist identisch gestaltet wie der Bajonettverschlussabschnitt des linken Trägerprofils 2a. Auch die weibliche Bajonettverschlussaufnahme der rechten Trägeraufnahme 1b weist analog der linken Trägeraufnahme 1a zwei Kulissenführungen auf, die in ihrem Endbereich in Umfangsrichtung rechtwinklig abgewinkelt sind. Allerdings sind die Kulissenführungen der rechten Trägeraufnahme 1b in den Darstellungen der Zeichnungen im Gegenuhrzeigersinn abgewinkelt, so dass die Kulissenzapfen des männlichen Bajonettverschlussabschnitts des ersten Profilschenkels 5 des rechten Trägerprofils 2b nach ihrem Einstecken im Gegenuhrzeigersinn gedreht werden müssen, um in die arretierte Endstellung zu gelangen.

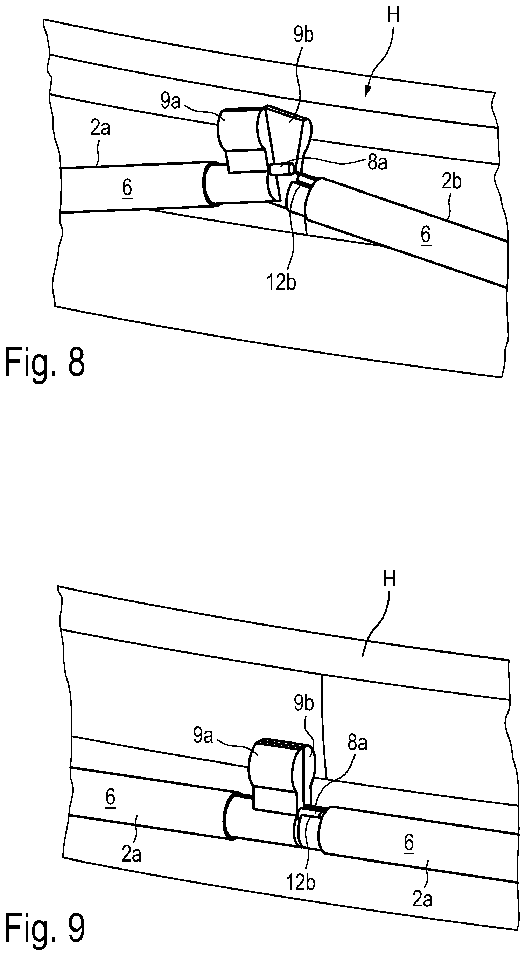

Jedes Trägerprofil 2a und 2b weist zudem an einem zu dem jeweiligen ersten Profilschenkel 5 abliegenden Stirnendbereich des jeweiligen zweiten Profilschenkels 6 jeweils eine Stützprofilierung 4a und 4b auf, die funktional identisch gestaltet, jedoch relativ zu einer vertikalen Fahrzeugquerebene spiegelsymmetrisch ausgeführt sind. Jede Stützprofilierung 4a und 4b ist fest mit dem jeweiligen zweiten Profilschenkel 6 verbunden und weist einen koaxial zum zweiten Profilschenkel 6 abragenden Fortsatz auf, der auf einer Hälfte einen halbzylindrischen Profilabschnitt und auf der anderen Hälfte einen mit einer nach oben offenen Aufnahmenut 12b versehenen Aufnahmefortsatz aufweist. Der Aufnahmefortsatz ist gegenüber dem halbzylindrischen Profilabschnitt kürzer gestaltet. Auf dem halbzylindrischen Profilabschnitt thront zudem ein Trägerabschnitt 9a, 9b. Die beiden Trägerabschnitte 9a und 9b ergänzen sich in betriebsfertig montiertem Zustand (Fig. 9) zu einer gemeinsamen Trägerkontur, die als in betriebsfertig montiertem Zustand nach oben abragender Trägerkopf gestaltet ist. Dabei bildet jeder Trägerabschnitt 9a und 9b jeweils eine Hälfte dieses Trägerkopfs, auf die vertikale Fahrzeugquerebene bezogen. Jeder halbzylindrische Profilabschnitt der Stützprofilierungen 4a und 4b ist zudem mit einem Stützzapfen 8a versehen, der sich parallel zu einer Mittellängsachse des jeweiligen zweiten Profilschenkels 6 erstreckt und stirnseitig von der jeweiligen Stützprofilierung 9a, 9b aus frei abragt. Der Stützzapfen 8a ist auf die Stützaufnahme 12b des jeweils gegenüberliegenden Trägerprofils 2a, 2b abgestimmt. Die Stützaufnahme 12b, die bezüglich des Trägerprofils 2a nicht erkennbar ist und demzufolge auch kein eigenes Bezugszeichen erhalten hat, kann mit einem elastisch nachgiebigen Rastelement, insbesondere mit einer entsprechend gestalteten Blattfeder, versehen sein. Dadurch ergibt sich beim Einrasten des jeweiligen Stützzapfens 8a in die Stützaufnahme 12b ein zusätzlicher Widerstand, der für eine Bedienperson das Erreichen der betriebsfertig montierten Endstellung signalisiert. Jede Stützaufnahme 12b ist zur gegenüberliegenden Stützprofilierung sowie nach oben offen, nach unten hin jedoch geschlossen, wodurch sich für den Stützzapfen 8a der gegenüberliegenden Stützprofilierung in Hochrichtung nach unten ein Stützanschlag ergibt.

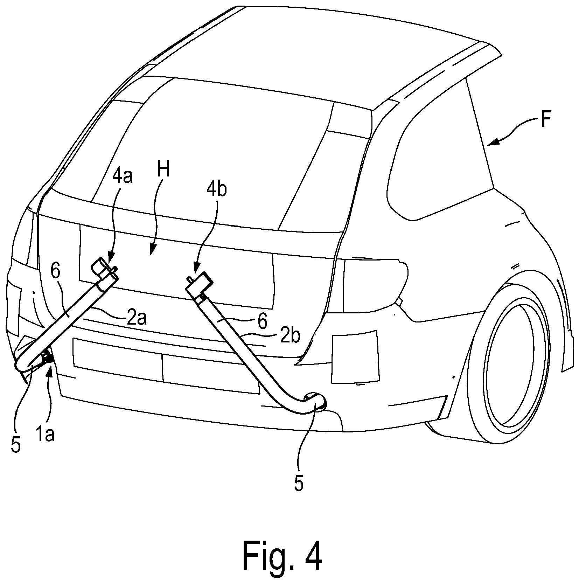

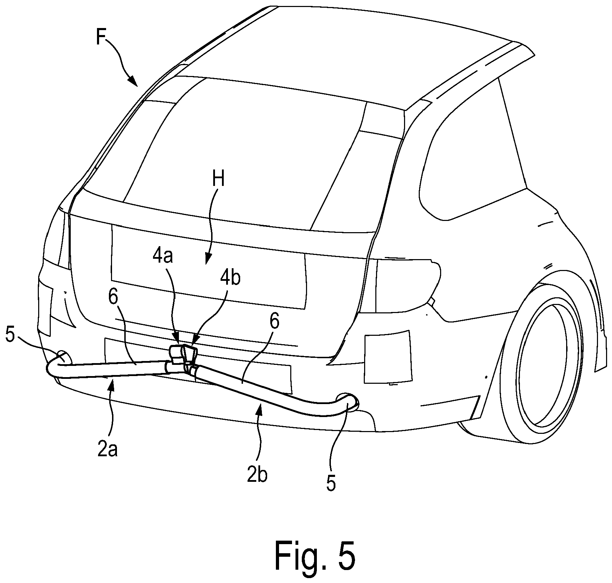

Wenn nun die beiden Trägerprofile 2a, 2b aus der Stellung gemäß den Fig. 1 bis 3, in der die beiden Trägerprofile um einen spitzen Winkel zu einer horizontalen Fahrzeugquerebene ausgerichtet sind, mit ihren Befestigungsprofilierungen 3a und 3b in die Trägeraufnahmen 1a und 1b eingesteckt werden, gleiten die Kulissenzapfen der männlichen Bajonettverschlussabschnitte beider Befestigungsprofilierungen 3a und 3b zunächst in Fahrzeuglängsrichtung in die Kulissenführungen der weiblichen Bajonettverschlussaufnahmen der Trägeraufnahmen 1a und 1b nach vorne, bis die Kulissenzapfen die Endbereiche der Kulissenführungen erreicht haben. Hiermit ist eine Zwischenstellung gemäß Fig. 4 erreicht. Anschließend werden beide Trägerprofile 2a und 2b gegensinnig zueinander zur Mitte hin verdreht, wobei die Kulissenzapfen der männlichen Bajonettverschlussabschnitte in den in Umfangsrichtung verlaufenden Kulissenabschnitten der Kulissenführungen der weiblichen Bajonettverschlussaufnahmen entlanggleiten. Kurz vor einer Horizontalen (Fig. 5) beginnen die Stützprofilierungen 4a, 4b der beiden Trägerprofile 2a und 2b einander in Fahrzeugquerrichtung zu überlagern (siehe auch Fig. 8). Bei einem weiteren gegensinnigen Verschwenken tauchen die Stützzapfen 8a in die jeweiligen Stützaufnahmen 12b ein. Die Stützzapfen 8a haben den Endanschlag in den Stützaufnahmen 12b erreicht, wenn auch die Bajonettverschlussanordnungen in ihrer endseitigen Drehstellung angelangt sind. In dieser Endstellung gemäß den Fig. 6 und 9 sind die Trägerabschnitte 9a und 9b der Stützprofilierungen 4a und 4b einander so parallel überlagert, dass sie in Fahrzeuglängsrichtung miteinander fluchten und gemeinsam jeweils eine Hälfte einer den Trägerkopf bildenden Trägerkontur stellen. Die Trägerabschnitte ragen gegenüber den zweiten Profilschenkeln 6 aus nach oben ab, wie den Zeichnungen gut zu entnehmen ist. Die Trägerprofile 2a und 2b werden somit zwischen der Einsteckposition und der verdrehten Endstellung um weniger als 90° verdreht.

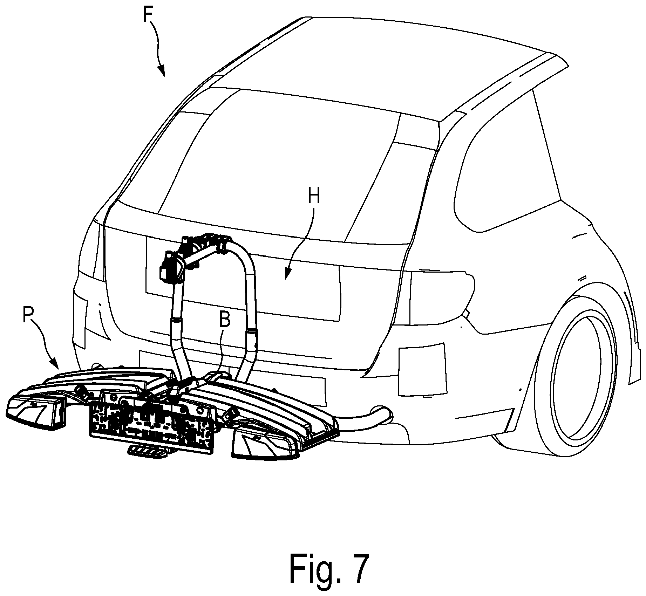

In dieser betriebsfertig montierten Endstellung können nun weitere Funktionskomponenten des Heckträgersystems auf dem durch die Stützprofilierungen 4a und 4b gebildeten Trägerkopf befestigt werden. Wie anhand der Fig. 7 erkennbar ist, kann eine Funktionsplattform P zur Halterung mehrerer Fahrräder mittels einer Befestigungsvorrichtung B auf dem Trägerkopf der Stützprofilierungen 4a und 4b montiert werden. Die Befestigungsvorrichtung B entspricht einer Befestigungsvorrichtung, die dafür vorgesehen ist, auf einem Kugelkopf einer Anhängerkupplung montiert zu werden. Das Fixieren der Befestigungsvorrichtung B der Funktionsplattform P des Heckträgersystems auf dem durch die Trägerabschnitte 9a und 9b gebildeten Trägerkopf bewirkt eine zusätzliche Fixierung der beiden Trägerabschnitte 9a und 9b und damit der beiden Trägerprofile 2a und 2b relativ zueinander.

Falls das Heckträgersystem wieder demontiert werden soll, wird in einfacher Weise die Befestigungsvorrichtung B gelöst und die Funktionsplattform P entfernt. Anschließend werden in einfacher Weise durch eine Bedienperson die beiden Trägerprofile 2a und 2b vorzugsweise unmittelbar benachbart zu den Stützprofilierungen 4a und 4b ergriffen und nach oben gezogen. Hierdurch schwenken die Trägerprofile 2a und 2b zwangsläufig gegensinnig zueinander wieder auf. Sobald sie die Montagestellung gemäß Fig. 1 und 4 wieder erreicht haben, können die Trägerprofile 2a und 2b aus den Trägeraufnahmen 1a und 1b wieder herausgezogen werden. Eine Montage und Demontage der Trägerprofile erfolgt demzufolge jeweils werkzeuglos.

## Patentansprüche

1. Heckträgersystem für ein Kraftfahrzeug (F) mit zwei fahrzeugfesten Trägeraufnahmen (1a, 1b), und mit zwei Trägerprofilen (2a, 2b), die an fahrzeugseitigen Endbereichen jeweils mit einer Befestigungsprofilierung (3a, 3b) versehen sind, mittels der jedes Trägerprofil (2a, 2b) in betriebsfertig montiertem Zustand lösbar an der zugeordneten Trägeraufnahme (1a, 1b) befestigt ist, wobei jedes Trägerprofil (2a, 2b) in Abstand zu der Befestigungsprofilierung (3a, 3b) mit einer Stützprofilierung (4a, 4b) versehen ist, wobei die Stützprofilierungen (4a, 4b) in betriebsfertig montiertem Zustand der Trägerprofile (2a, 2b) formschlüssig gegeneinander abgestützt sind, **dadurch gekennzeichnet, dass** die Befestigungsprofilierung (3a, 3b) jedes ersten Profilschenkels (5) jedes Trägerprofils (2a, 2b) und die zugeordnete fahrzeugfeste Trägeraufnahme (1a, 1b) als komplementäre Bajonettverschlussabschnitte (10, 11) einer Bajonettverschlussanordnung gestaltet sind, die derart ausgelegt ist, dass der jeweilige zweite Profilschenkel (6) in der betriebsfertig verdrehten Endstellung des ersten Profilschenkels (5) fluchtend zu dem zweiten Profilschenkel (6) des jeweils anderen Trägerprofils (2a, 2b) ausgerichtet ist.

2. Heckträgersystem nach Anspruch 1, **dadurch gekennzeichnet, dass** die Stützprofilierungen (4a, 4b) der gegenüberliegenden zweiten Profilschenkel (6) derart relativ zueinander ausgerichtet sind, dass die Stützprofilierungen (4a, 4b) bei einer Verdrehung der zweiten Profilschenkel (6) aus einer Einsteckposition in die betriebsfertig verdrehte Endstellung zwangsläufig abschnittsweise ineinander eintauchen.

3. Heckträgersystem nach Anspruch 1 oder 2, **dadurch gekennzeichnet, dass** jedes Trägerprofil (2a, 2b) winklig gekrümmt ist, wobei die Befestigungsprofilierung (3a, 3b) an einem ersten Profilschenkel (5) und die Stützprofilierung (4a, 4b) an einem abgewinkelten zweiten Profilschenkel (6) angeordnet sind.

4. Heckträgersystem nach Anspruch 3, **dadurch gekennzeichnet, dass** die Befestigungsprofilierung (3a, 3b) und die Stützprofilierung (4a, 4b) an gegenüberliegenden Stirnendbereichen des Trägerprofils (2a, 2b) vorgesehen sind.

5. Heckträgersystem nach einem der vorhergehenden Ansprüche, **dadurch gekennzeichnet, dass** jedes Trägerprofil (2a, 2b) einteilig oder mehrteilig gestaltet ist.

6. Heckträgersystem nach einem der vorhergehenden Ansprüche, **dadurch gekennzeichnet, dass** die beiden Stützprofilierungen (4a, 4b) der Trägerprofile (2a, 2b) in betriebsfertig montiertem Zustand einen Trägerabschnitt (9a, 9b) zur Halterung wenigstens einer Funktionskomponente des Heckträgersystems bilden.

7. Heckträgersystem nach einem der vorhergehenden Ansprüche, **dadurch gekennzeichnet, dass** in betriebsfertig montiertem Zustand die zweiten Profilschenkel (6), die die Stützprofilierungen (4a, 4b) tragen, einander zugewandt sind.

8. Heckträgersystem nach einem der vorhergehenden Ansprüche, **dadurch gekennzeichnet, dass** in betriebsfertig montiertem Zustand die komplementären Stützprofilierungen (4a, 4b) einander derart überlagern, dass sie eine gemeinsame Trägerkontur für die Befestigung einer Haltevorrichtung von Funktionskomponenten des Heckträgersystems bilden.

9. Heckträgersystem nach einem der vorhergehenden Ansprüche, **dadurch gekennzeichnet, dass** die Stützprofilierungen (4a, 4b) einander in betriebsfertig montiertem Zustand in Hochrichtung zumindest abschnittsweise hintergreifen unter Bildung eines gegenseitigen, in Hochrichtung wirksamen Stützanschlags.

10. Heckträgersystem nach Anspruch 8 oder 9, **dadurch gekennzeichnet, dass** die Trägerkontur in betriebsfertig montiertem Zustand der Profilschenkel (6) nach Art eines Trägerkopfs nach oben abragt, und dass die Trägerkontur jeweils abschnittsweise durch die Stützprofilierungen (4a, 4b) beider Profilschenkel (6) gebildet ist.

11. Heckträgersystem nach einem der vorhergehenden Ansprüche, **dadurch gekennzeichnet, dass** der Bajonettverschlussabschnitt (11) jeder fahrzeugfesten Trägeraufnahme (1a, 1b) mit einem Endanschlag versehen ist, der der betriebsfertig verdrehten Endstellung der ersten Profilschenkel (5) entspricht.

12. Heckträgersystem nach einem der Ansprüche 1, 2 oder 11, **dadurch gekennzeichnet, dass** die Bajonettverschlussabschnitte (11) der benachbarten Trägeraufnahmen (1a, 1b) gegensinnig zueinander ausgerichtet sind.

## Claims

1. Rear carrier system for a motor vehicle (F) with two carrier receptacles (1a, 1b) fixed to the vehicle and with two carrier sections (2a, 2b) that are each provided, at end regions on the vehicle side, with a fastening profile (3a, 3b) by means of which each carrier section (2a, 2b) is, in the state assembled ready for operation, detachably fastened to the associated carrier receptacle (1a, 1b), wherein each carrier section (2a, 2b) is provided, at a distance from the fastening profile (3a, 3b), with a supporting profile (4a, 4b), and wherein the supporting profiles (4a, 4b)are, in the state assembled ready for operation of the carrier sections (2a, 2b), positively braced against one another, **characterized in that** the fastening profile (3a, 3b) of each first section leg (5) of each carrier section (2a, 2b) and the associated carrier receptacle (1a, 1b) fixed to the vehicle are configured as complementary bayonet fitting portions (10, 11) of a bayonet fitting arrangement designed such that the respective second section leg (6) is, when the first section leg (5) is in the end position rotated ready for operation, aligned flush with the second section leg (6) of the other carrier section (2a, 2b) respectively.

2. Rear carrier system according to claim 1, **characterized in that** the supporting profiles (4a, 4b) of the opposite second section leg (6) are aligned relative to one another such that the supporting profiles (4a, 4b) necessarily engage one another in some portions when the second section leg (6) is rotated out of an insertion position into the end position rotated ready for operation.

3. Rear carrier system according to claim 1 or 2, **characterized in that** each carrier section (2a, 2b) is curved at an angle, wherein the fastening profile (3a, 3b) is arranged on a first section leg (5) and the supporting profile (4a, 4b) on an angled second section leg (6).

4. Rear carrier system according to claim 3, **characterized in that** the fastening profile (3a, 3b) and the supporting profile (4a, 4b) are provided at opposite front end regions of the carrier section (2a, 2b).

5. Rear carrier system according to any of the preceding claims, **characterized in that** each carrier section (2a, 2b) is configured in one piece or in a plurality of pieces.

6. Rear carrier system according to any of the preceding claims, **characterized in that** the two supporting profiles (4a, 4b) of the carrier sections (2a, 2b) form, in the state assembled ready for operation, a carrier portion (9a, 9b) for holding at least one function component of the rear carrier system.

7. Rear carrier system according to any of the preceding claims, **characterized in that** in the state assembled ready for operation, the second section legs (6) carrying the supporting profiles (4a, 4b) are facing one another.

8. Rear carrier system according to any of the preceding claims, **characterized in that** in the state assembled ready for operation, the complementary supporting profiles (4a, 4b) overlay one another such that they form a common carrier contour for fastening a holding device for function components of the rear carrier system.

9. Rear carrier system according to any of the preceding claims, **characterized in that** in the state assembled ready for operation, the supporting profiles (4a, 4b) grip behind each another at least in some portions in the vertical direction, while forming a mutual supporting stop which is effective in the vertical direction.

10. Rear carrier system according to claim 8 or 9, **characterized in that** in the state assembled ready for operation of the section leg (6), the carrier contour projects upwards in the manner of a carrier head, and **in that** the carrier contour is formed in some portions by the supporting profiles (4a, 4b) of both section legs (6).

11. Rear carrier system according to any of the preceding claims, **characterized in that** the bayonet fitting portion (11) of each carrier receptacle (1a, 1b) fixed to the vehicle is provided with an end stop that corresponds to the end position of the first section leg (5) rotated ready for operation.

12. Rear carrier system according to any of claims 1, 2 or 11, **characterized in that** the bayonet fitting portions (11) of the adjacent carrier receptacles (1a, 1b) are aligned in opposite directions to one another.

## Revendications

1. Système de porte-charges arrière pour un véhicule automobile (F) avec deux logements de support fixés au véhicule (1a, 1b) et avec deux profils de support (2a, 2b) qui sont pourvus sur les zones terminales côté véhicule respectivement d'un profilage de fixation (3a, 3b) au moyen duquel chaque profil de support (2a, 2b) est fixé au logement de support associé (1a, 1b) de manière amovible dans l'état monté prêt à l'emploi, sachant que chaque profil de support (2a, 2b) est pourvu d'un profilage d'appui (4a, 4b) écarté du profilage de fixation (3a, 3b), sachant que les profilages d'appui (4a, 4b) à l'état monté prêt à l'emploi des profils de support (2a, 2b) sont appuyés l'un contre l'autre par complémentarité de forme, **caractérisé en ce que** le profilage de fixation (3a, 3b) de chaque première branche de profil (5) de chaque profil de support (2a, 2b) et le logement de support (1a, 1b) associé, fixé au véhicule sont conçus comme sections de fermeture à baïonnette (10, 11) complémentaires d'un dispositif de fermeture à baïonnette qui est conçu de sorte à ce que la seconde branche de profil (6) respective dans la position finale tournée prête à l'emploi de la première branche de profil (5) est orientée alignée à la seconde branche de profil (6) de l'autre profil de support (2a, 2b) respectif.

2. Système de porte-charges arrière selon la revendication 1, **caractérisé en ce que** les profilages d'appui (4a, 4b) des secondes branches de profil (6) opposées sont orientés l'un par rapport à l'autre de telle sorte que les profilages d'appui (4a, 4b) s'emboîtent l'un dans l'autre obligatoirement partiellement, lors d'une rotation des secondes branches de profil (6) depuis une position d'insertion pour atteindre la position finale tournée prête à l'emploi.

3. Système de porte-charges arrière selon la revendication 1 ou 2, **caractérisé en ce que** chaque profil de support (2a, 2b) est courbé en angle, sachant que le profilage de fixation (3a, 3b) est disposé sur une première branche de profil (5) et le profilage d'appui (4a, 4b) est disposé sur une seconde branche de profil (6) coudée.

4. Système de porte-charges arrière selon la revendication 3, **caractérisé en ce que** le profilage de fixation (3a, 3b) et le profilage d'appui (4a, 4b) sont prévus sur des zones d'extrémité frontales opposées du profil de support (2a, 2b).

5. Système de porte-charges arrière selon l'une des revendications précédentes, **caractérisé en ce que** chaque profil de support (2a, 2b) est conçu sous la forme d'un seul élément ou de plusieurs éléments.

6. Système de porte-charges arrière selon l'une des revendications précédentes, **caractérisé en ce que** les deux profilages d'appui (4a, 4b) des profils de support (2a, 2b) à l'état monté prêt à l'emploi forment une section de support (9a, 9b) pour la fixation d'au moins une composante fonctionnelle du système de porte-charges arrière.

7. Système de porte-charges arrière selon l'une des revendications précédentes, **caractérisé en ce qu'**à l'état monté prêt à l'emploi, les secondes branches de profil (6) qui portent les profilages de support (4a, 4b) sont tournées l'une vers l'autre.

8. Système de porte-charges arrière selon l'une des revendications précédentes, **caractérisé en ce qu'**à l'état monté prêt à l'emploi, les profilages d'appui (4a, 4b) complémentaires se superposent de manière à former un contour de support commun pour la fixation d'un dispositif de maintien de composantes fonctionnelles du système de porte-charges arrière.

9. Système de porte-charges arrière selon l'une des revendications précédentes, **caractérisé en ce que** les profilages d'appui (4a, 4b) s'accrochent l'un à l'autre par l'arrière au moins partiellement dans le sens vertical à l'état monté prêt à l'emploi, en formant une butée d'appui mutuel, effective dans le sens vertical.

10. Système de porte-charges arrière selon la revendication 8 ou 9, **caractérisé en ce que** le contour de support à l'état monté prêt à l'emploi des branches de profil (6) dépasse vers le haut, à la façon d'une tête de support, et que le contour de support est formé respectivement partiellement par les profilages d'appui (4a, 4b) des deux branches de profil (6).

11. Système de porte-charges arrière selon l'une des revendications précédentes, **caractérisé en ce que** la section de fermeture à baïonnette (11) de chaque logement de support (1a, 1b) fixé au véhicule est pourvue d'une butée finale qui correspond à la position finale tournée prête à l'emploi des premières branches de profil (5).

12. Système de porte-charges arrière selon l'une des revendications 1, 2 ou 11, **caractérisé en ce que** les sections de fermeture à baïonnette (11) des logements de support voisins (1a, 1b) sont orientées en sens inverse l'une de l'autre.
